# EUROPEAN PATENT SPECIFICATION

(11) **EP 1 161 633 B1**
(45) Date of publication and mention of the grant of the patent: **03.09.2003**
(21) Application number: 99909568.0
(22) Date of filing: 10.03.1999
(51) Int. Cl.: F16G 3/10

(54) **PREFORMED STRIP AND METHOD FOR SPLICING CONVEYOR BELTS**
VORGEFORMTER STREIFEN UND VERFAHREN ZUR HERSTELLUNG VON FÖRDERGUTVERBINDUNGEN
BANDE PREFORMEE ET PROCEDE D'EPISSAGE DE COURROIES DE TRANSPORTEUR

(43) Date of publication of application: 12.12.2001
(73) Proprietor: The Goodyear Tire & Rubber Company, Akron, Ohio 44316-0001 (US)
(72) Inventor: STEVEN, Robin, Bovaird, Dublin, OH 43016 (US); MAGUIRE, David, Joseph, Dublin, OH 43017 (US); LEDERER, Steven, Andrew, Fairlawn, OH 44333 (US); HEAD, William, James, Ravenna, OH 44266 (US); GEHRETT, Larry, James, Atwater, OH 44201 (US); BENZING, James, Alfred, II, North Canton, OH 44720 (US)
(74) Representative: Leitz, Paul
(86) International application number: US9903959
(87) International publication number: WO00053952

(56) References cited:
- EP-A- 0 372 510
- US-A- 3 487 871

## Description

### Technical Field

This invention relates to a method and apparatus for forming splices at the ends of conveyor belts.

### Background of the Invention

Conveyor belts are commonly used as a means to move material from one location to another. In large mining operations, the conveyor belt is generally formed of a rubber body embedded with steel cords or strands. A cover compound can be used at the surface wherein the material is to be conveyed. Generally the compound is very abrasion and cut resistant and of sufficient thickness to prevent the rocks being conveyed from tearing the belt. A pulley compound can be used on the interior surface, this rubber is ideally suited for improved wear as the belt traverses over the pulleys used to drive the belt.

These steel corded or stranded belts may extend several miles and cost millions of dollars to install and fabricate. The fabrication of such belts occurs initially at a factory wherein steel strands or cords are arranged in a coplanar relationship parallel to the surface of the belt so that the belt will exhibit uniform expansion and minimize weaving as it traverses which can cause belt damage.

The prior art method of fabricating belts requires the steps of vulcanizing the rubber belt and winding it onto large spools for shipping to the site. Once the spools of belt are received at the site, the ends must be prepared for splicing by removing the vulcanized rubber from the strands over a distance determined to be sufficient to provide enough joint length to make a secure splice.

Removal of the rubber can be a very time consuming and tedious task. Often times piano wire is used to peel the vulcanized rubber from the strands. In large belts of several feet in width over a hundred strands must be exposed at each joint end. Once exposed, the strands had to be cleaned of as much of the vulcanized rubber as possible. The strands were then cleaned with solvents such as toluene and then a bonding agent was applied comprising a 3:2 mixed solution of "Chemlok No. 203" and xylene, for example, and rubber cement is applied to the strands and dried. After the preparation of both ends as described in U.S. Patent No. 3,487,871 entitled "A METHOD OF JOINING CONVEYOR BELTS HAVING STEEL CORDS EMBEDDED THEREIN" granted January 6, 1970, a joining member is formed made of vulcanized or semi-vulcanized rubber of the same quality as the rubber used in the formation of the belt. The upper face of the member is preferably made of a non-vulcanized rubber and provided with a plurality of strand receiving grooves. Once the strands are in place, a bonding agent of the type described above is preferably coated on the faces of the surfaces to insure complete bonding. While this prior art patent use the term "non-vulcanized rubber" being preferable at the melting surfaces of the otherwise vulcanized or semi-vulcanized member (13), it is believed that the term means "having at least its upper surface formed of incompletely vulcanized rubber" as was required in the claim of the patent. An important limitation when the member for splicing is semi-vulcanized at this grooved surface, the use of semi-cured rubber forced the use of bonding solvents. These solvents are high in VOC's and the liberal use of xylene and toluene creates carcinogenic risks to the personnel. In developed parts of the world, the use of such solvents is greatly discouraged.

The most relevant prior art can be found in EP-A-0 372 510 which discloses a method of splicing the ends of conveyor belts having vulcanized rubber with steel strands embedded in the vulcanized rubber comprising the steps of exposing a plurality of strands; providing at least two unvulcanized strips 90,92 of rubber, at least one strip 92 being a bottom strip having a plurality of substantially parallel strand receiving grooves located on an upper surface, the other 90 at least one strip being a top strip; placing the exposed strands 100 of the belt ends being joined in the grooves of the at least one bottom strip; and placing the top strip 90 overlying the bottom strip 92 and vulcanizing the strips together and to strands 100 thereby forming the spliced joint

A second limitation of the prior art splicing member is that the member was apparently molded to the exact width of the belt and had exactly twice the number of strands as the belt. This meant that for each belt width, there had to be a unique member since conveyor belts are not standardized in width or in the size or in the number of strands to use the concept taught in that patent required specially designed molds.

A third limitation of the method of splicing described in U.S. Patent No. 3,487,871 was that the strands had to be free of any of the vulcanized belt rubber which, if left on the strands, adversely affected the bonding.

An object of the present invention is to eliminate the need to semi-vulcanize the splicing member.

Another objective is to make the use of solvents unnecessary.

Still another objective is to eliminate the need to completely strip the strands of all vulcanized rubber prior to splicing.

A still further objective is to provide a splicing strip that can be used in multiples independent of the width of the belt or the corresponding number of strands.

A still further objective is to improve the splice strength while saving time in splice preparation.

### Summary of the Invention

A method of splicing the ends of conveyor belts having vulcanized rubber with steel strands embedded in the vulcanized rubber, elastomeric strips for splicing a steel cable reinforced belt and a splice joint kit of the elastomeric strips for splicing a steel cable reinforced belt are provided by the instant invention as defined in the claims.

### Brief Description of Drawings

FIGURE 1 is a fragmentary cross-sectional view of an exemplary belt structure having steel strands embedded in vulcanized rubber.
FIGURE 2 is a perspective view of a belt end prepared for attachment to a corresponding belt end and a plurality of the preformed unvulcanized strips of rubber for joint splicing.
FIGURE 3 is a steel cord strand shown sheathed in a coating of the vulcanized belt rubber.
FIGURE 4 is a side elevation view of a vulcanizing press for forming a belt joint in accordance to the invention.
FIGURE 5 is a perspective view of a calender apparatus for forming the preformed elastomeric strip.
FIGURE 6 is a cross-sectional view of the calender roller with ridges for forming the strand receiving grooves in the strip.
FIGURE 7 is a cross-sectional view of a preferred strip.
FIGURE 8 is a cross-sectional view of a preformed strip with a layer of bottom pulley rubber laminated to the strip.
FIGURE 9 is a cross-sectional view of a preformed strip with a layer of top cover rubber laminated to it.
FIGURE 10 is a perspective view of the strip assembly in an exemplary kit for splicing a joint for a belt reinforced with steel strands embedded in rubber.

### Detailed Description of the Invention

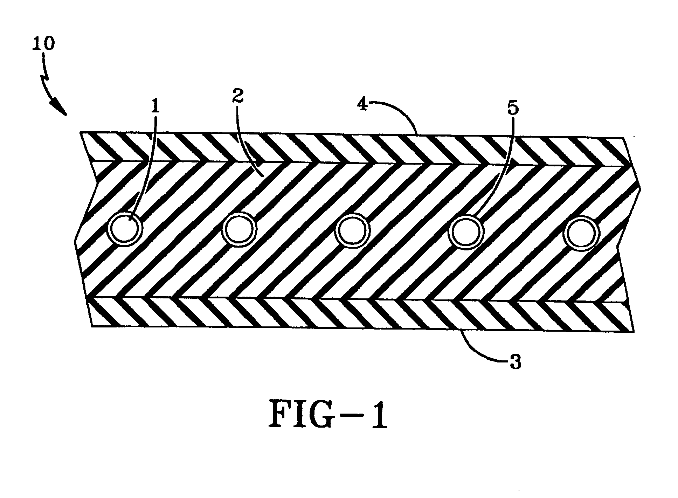

With reference to FIGURE 1, an exemplary conveyor belt (10) will be observed. The belt (10) has a plurality of steel cords or strands (1) embedded in a core or central layer of rubber (20). As illustrated, the central layer (2) is bounded by a bottom layer of rubber (3) of a compound ideally suited for contacting the drive pulleys of the conveyor system (not shown) and a cover layer (4) of a rubber compound ideally suited for abrasion and cut resistance. Additionally, such belts (10) may include additional textile or fabric layers or alternatively are formed utilizing only a single homogeneous rubber without a top or bottom compound while the steel strands of the belt may be impregnated or coated with a thin rubber bonding layer or sheath (5) to enhance cord adhesion. Nevertheless, the present invention is ideally suite to facilitate the splicing of almost any known type of rubber conveyor belts (10) having steel cords or strands (1).

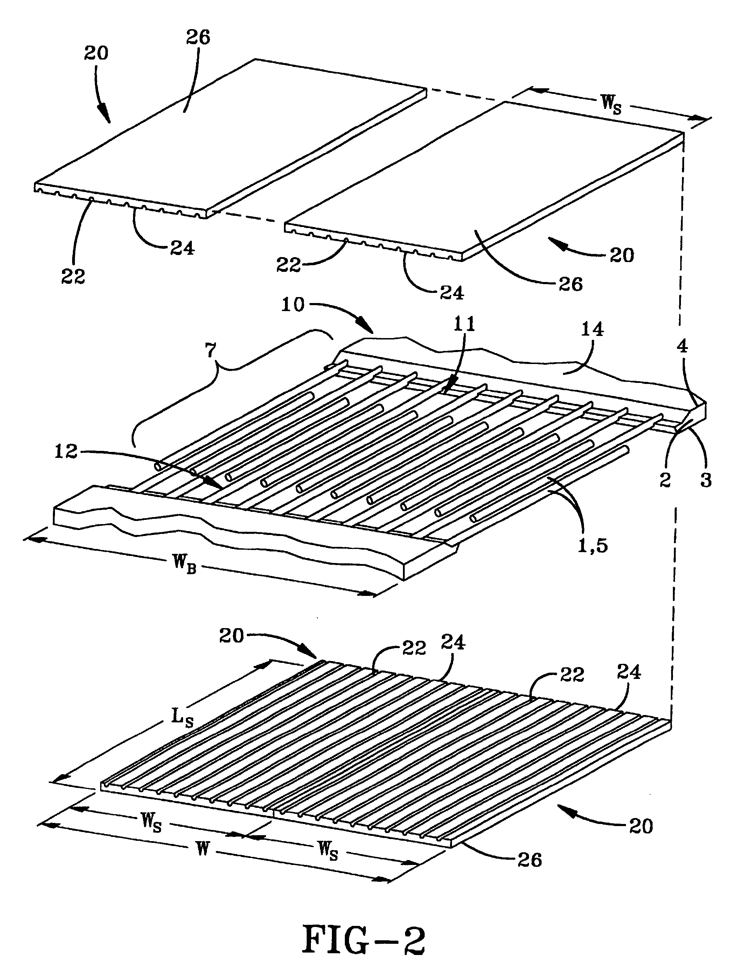

As shown, preparation of the belt ends (11, 12) to be joined is illustrated in FIGURE 2. The belt ends (11, 12) has a portion of the body (14) of the belt (10) removed to expose the steel strands (1). For convenience, the term "body (14) of the belt (10)" is intended to include all body elements such as the central layer (2), the bottom (3), the cover (4), and any other layers. That portion of the body (14) is removed preferably across the width of the belt in a diagonally extending direction. This insures that the splice seam will not approach a drive pulley simultaneously. Additionally the layer of rubber on the top surface of the strands may be cut back further than the lower layer of rubber below the strands, this method of ends (11, 12) preparation is commonly referred to as a stepped contour. These features, although not required, can improve the splice joint in some applications.

Once the rubber body (14) is removed from an end (11, 12), the strands (1) of steel cord are exposed. In some techniques of removing the rubber body (14) steel piano wire is used to peel the rubber off the cords (1). In that method of body removal (14), virtually all of the rubber sheathing the steel cord is removed such that the cords are only at least partially sheathed in cured rubber. If desired, the remaining rubber bonded to the cords or strands can be removed by wire brushes or the like. This technique is quite tedious and time-consuming, however, and is preferably avoided.

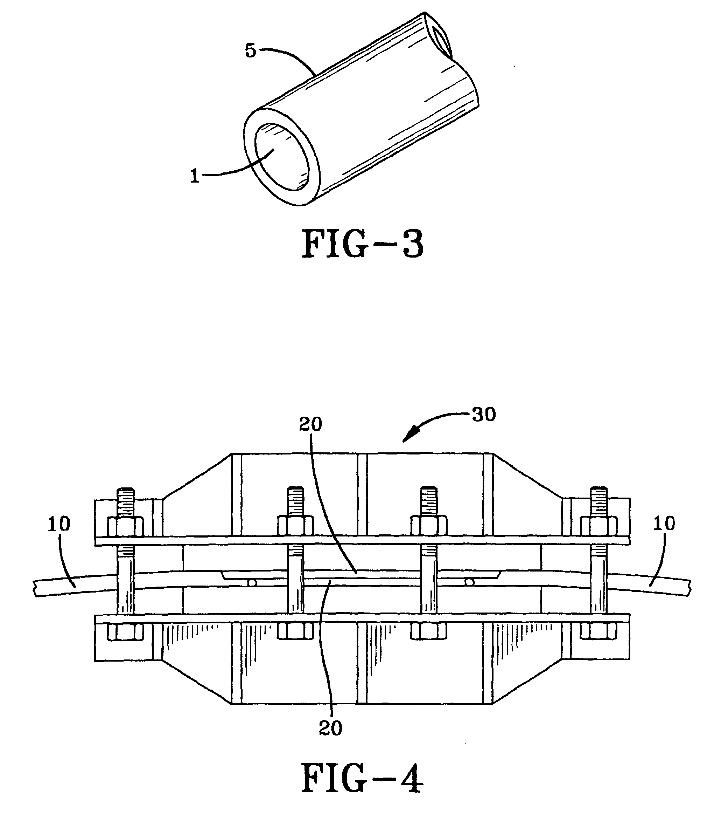

An alternative method of removing the rubber body (14) includes using a means having contoured cutting surfaces that remove the rubber body (14) while leaving the strands (1) coated in a thin sheath of rubber (5) as shown in FIGURE 3. In this technique, the strands (1) can be buffed to enhance the adhesion of the cured rubber sheath (5) prior to splicing the joint.

It is important to note that the present invention is ideally submitted to be used on belts; wherein the strands are exposed at the end of the belts as a result of a technique of manufacture. In such a case, the step of preparing the ends (11, 12) for splicing can be avoided or modified eliminating the step of removing the cured rubber.

As shown in FIGURE 2, the exposed strands (1) are ideally placed in depressions in preformed strips (20) of unvulcanized rubber. These depressions each represent a strand receiving groove (22). Ideally, the number of grooves (22) per inch are twice the number of strands per inch at one end of the belt.

Each preformed strip (20) of rubber splicing has a width (Wₛ) and a length Lₛ as shown in FIGURE 2. The strips (20) has a first surface (24) having a plurality of grooves (22) and a second surface (26), the second surface (26) being generally flat or planar.

By orienting the flat strip (20) with the grooved first surface (24) adjacent the strands (1), the strands (1) of one end (11) can be placed in every other groove (22) while the strands (1) of the other end (12) fills the grooves (22) remaining to be filled. The resulting strands (1) from end (11) and those from end (12) form an overlapping array of strands (1).

Since the number of strands (1) in the splice joints are approximately double the number of strands in the rest of the conveyor belt (10), it is possible to vary the length of the cords or strands (1) in a number of patterned sequences. The principle concept being that a cord (1) cut short in end (11) would be adjacent one or two long cords (1) in end (12) and vice-versa. The resultant effect is that the cords' ends do not bend around the drive pulley at a simultaneous occurrence giving rise to a peak stress. While these splicing techniques are well known in the art, it is important to note that they are easily adaptable to the present invention.

Once the cords or strands (1) are all placed in the grooves (22) in a proper splicing sequence, a top strip or strips is placed over the splice opening covering the strands with a strip of uncured rubber on both the top and bottom.

Preferably, the top strip may be grooved similar to the bottom strip. Most preferably, the top and bottom strips are the same in profile and composition.

Alternatively, the top strip may simply be a flat component of uncured rubber.

Dependent on the amount of opening needed for the splice joint, the strips (20) may be provided slightly larger than needed in such a case, the strips may be trimmed to fit as needed.

Most preferably, the strips are sized in terms of length to provide the optimal splicing length L_{S} for strength and durability and no trimming or cutting of the strip would be recommended. In this case, the belt manufacture can at least insure the splice length is sufficient.

In terms of strip width (W_{S}), an important feature of the splicing strip is that they are preformed to a width (W_{S}) that is generally narrower than the belt width (W_{B}). In belts having a width of five feet or more, it can easily be appreciated that pluralities of narrower strips are easier to handle. The splicing operator simply can place as many strips as are needed to cover the strands and then must trim cut the last strip to substantially match the overall belt width. Ideally, this trimming simply requires taking a hot knife or similar cutting element and passing it through a groove (22) of the strip. This procedure is applicable to both the top and the bottom of the splice joint.

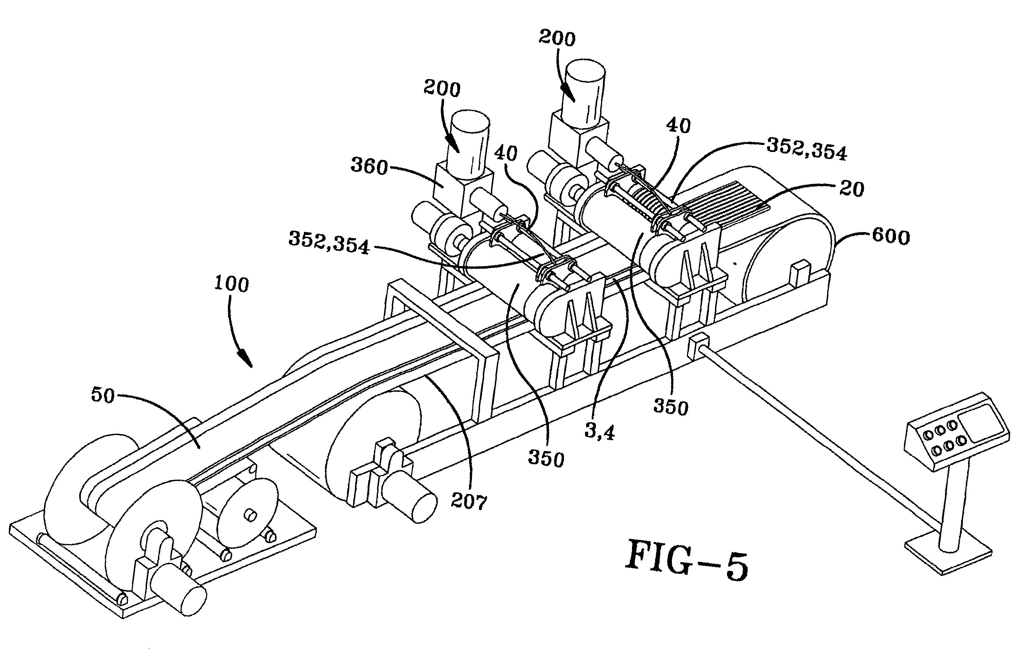

Once the uncured strips (20) are positioned and the strands properly placed in the grooves (22), the joint area is placed in a curing press (30) as is shown in FIGURE 4. Once cured, the splice is complete. The advantages of precision and quality control improvements can be easily appreciated over the more arcane techniques used in the prior art but, in addition to making a superior splice, this method can reduce splicing time by as much as half over current techniques. When one considers that as many as a hundred splices may be needed in a large mining belt, a reduction from 8 hours to less than 4 hours to complete a single splice joint has obvious cost and time savings.

In FIGURE 5, a calender apparatus (100) is shown for forming the preformed elastomeric strip (20). The apparatus (100) has one or more calender assemblies (200), each assembly (200) has a pair of calender rollers (350, 352).

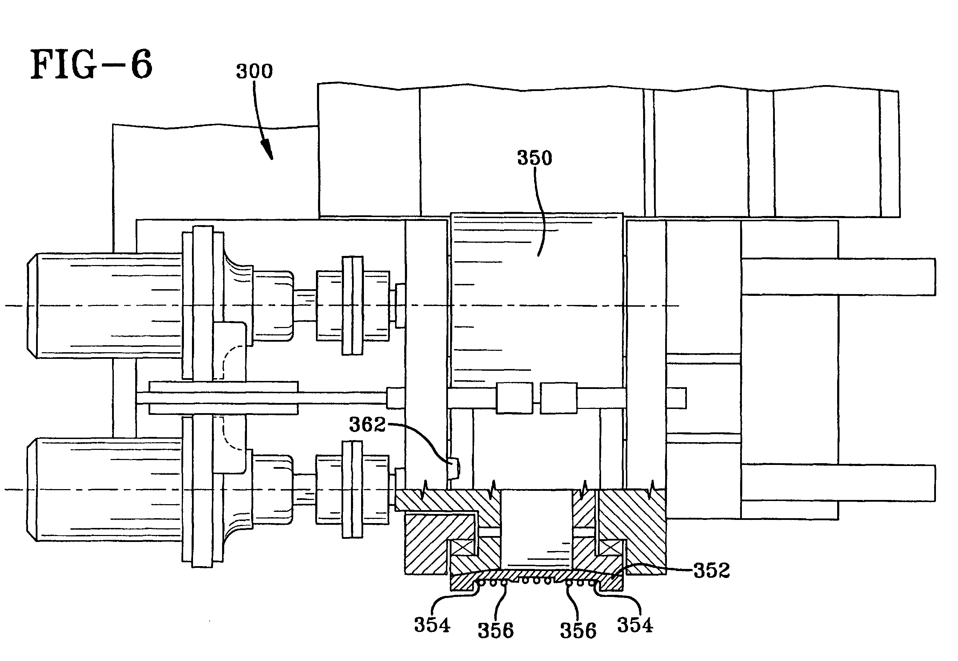

In FIGURE 6, one of the rollers (352) has a plurality of ridges (356) oriented in a parallel arrangement, the ridges (356) form the plurality of depressions (22) in the cross-sectional profile of the strips (20), these groove forming ridges (356) form the strand receiving grooves (22). One of the calender rollers (352), preferably the one with the ridges (356) has a component forming depression (354) which establishes the overall profile of the strip (20). The strip (20) itself is formed by delivering the uncured rubber (40) to the nip of the calendered rollers. As shown the means (360) for delivering the roller is an extruder (360) that processes the rubber into a round strand (40) that is fed into the nip. As the strip profile is formed, the strip (20) is transferred directly onto a conveying means (600). As shown, in the conveying means can be a steel conveyer belt (207).

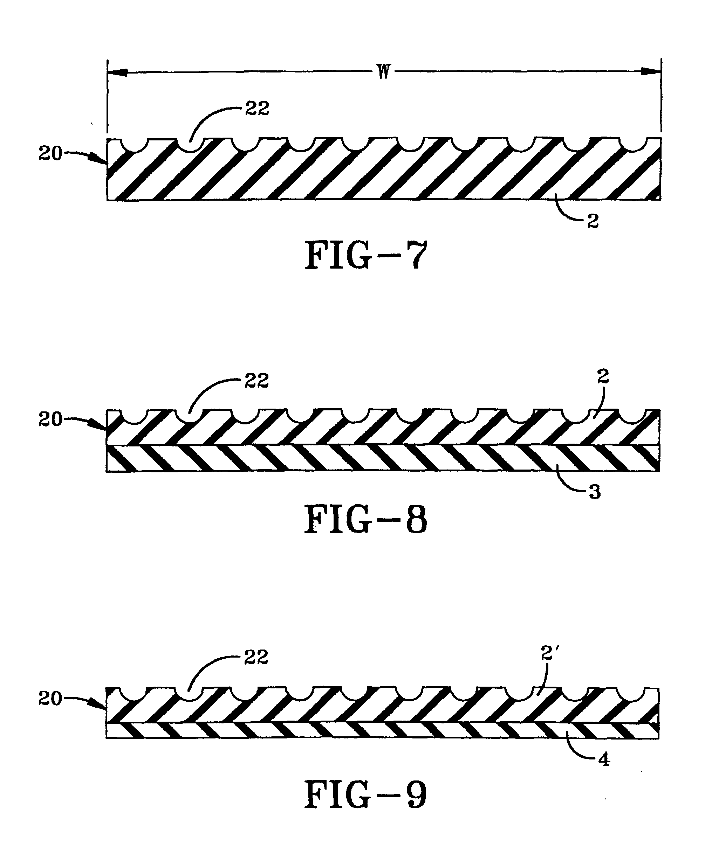

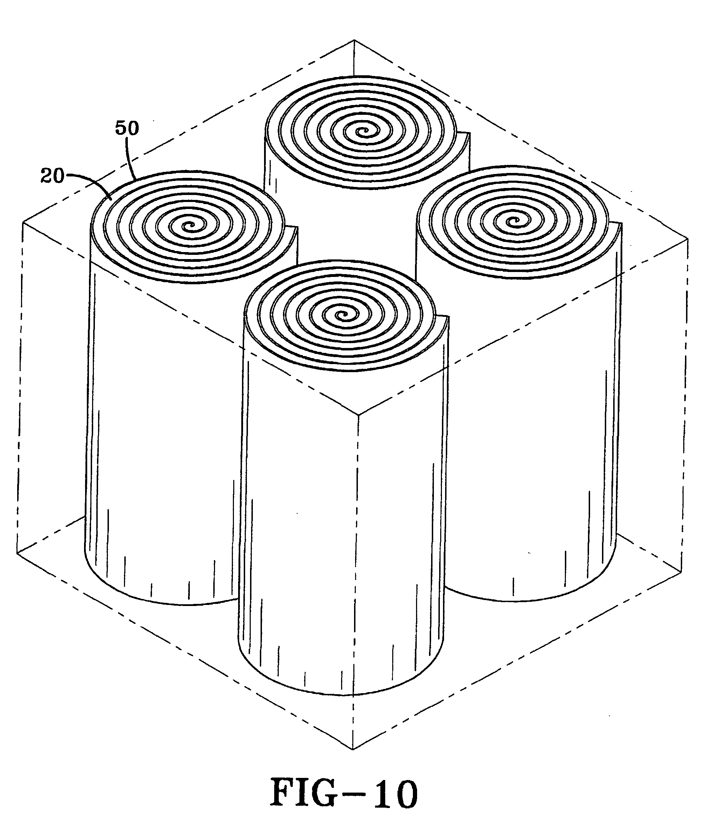

Alternatively, the strip (20) can be transferred onto another layer of rubber (3, 4). As shown in FIGURES 8 and 9 respectively, the preformed strips can be laminated onto a layer of bottom pulley rubber (3) or onto a layer of top cover rubber (4), thus, making specific top strips (20) and bottom strips (20). In such a case, two calender assemblies can be used to simultaneously form the two layers as shown in FIGURE 5.

It is believed preferable to transfer the strip (20) onto a carrier member such as liner (50). Most preferably a semi-rigid poly liner (50).

As shown in FIGURE 10, the strip (20) when placed on a liner (50) can be coiled and stacked vertically. Assuming the strip (20) is attached or transferred onto the liner (50) at the location where it is formed, i.e. at the calender roller, then the adhesion to the liner (50) is such that the strip (20) will be securely fixed to the liner (50). This minimized the potential for shipping and handling damage. As shown, the number of coils sent in a kit should be equal to the amount needed to make a splice joint.

As illustrated, the above apparatus (100) for making the strips (20) may include additional calender assemblies (200) to form either the top cover layer (4) or a bottom pulley layer (3).

Nevertheless, the principles of forming strips (20) advantageously enables the component to be preformed in a green or uncured state. This insures that the strips (20) can be used without the necessity of using solvents and cements.

## Claims

1. A method of splicing the ends (11, 12) of conveyor belts (10) having vulcanized rubber (12) with steel strands (1) embedded in the vulcanized rubber comprising the steps of:
exposing a plurality of strands (1);
providing at least two unvulcanized strips (20) of rubber, at least one strip (20) being a bottom strip having a plurality of substantially parallel strand receiving grooves (22) located on an upper surface (24), the other at least one strip (20) being a top strip;
placing the exposed strands (1) of the belt ends (11, 12) being joined in the grooves (22) of the at least one bottom strip (20);
placing the top strip (20) overlying the bottom strip (20) and vulcanizing the strips (20) together and to strands (1) thereby forming the spliced joint, the method **characterized in that** the step of providing the top or bottom strips (20) includes the steps of calendering in strips (20), the calenders (350,352) having a plurality of parallel component forming ridges (356), the ridges (356) forming the strand receiving grooves (22) of the upper surface (24) of the strips (20).

2. The method of splicing the ends (11,12) of a conveyor belt (10) of claim 1 wherein the steps of exposing a plurality of strands (1) includes removing a portion of the belt ends (11,12) to be joined, and providing at least two unvulcanized strips (20) of rubber included the steps of providing at least two bottom strips (20) and positioning the strips (20) adjacently to increase the width of the strips (20), and cutting one of the at least two bottom strips (20) parallel to the grooves (22), thereby, substantially matching the total strips width to the conveyor belt width.

3. The method of splicing the ends (11,12) of a conveyor belt (10) of claim 1 wherein the top strips (20) and the bottom strips (20) have the same number of receiving grooves (22).

4. The method of splicing the ends (11,12) of a conveyor belt (10) of claim 1 wherein the top and bottom strips (20) are the same in cross-sectional profile.

5. The method of splicing the ends (11, 12) a conveyor belt (10) of claim 1 wherein the step of calendering includes the step of applying the bottom strip (20) onto a strip of pulley contacting rubber compounds (3) as the bottom strip (20) is being formed at the calender roller thereby forming a dual compound bottom strip (20).

6. The method of splicing the ends (11, 12) a conveyor belt (10) of claim 1 wherein the step of calendering includes the step of applying the top strip (20) onto a slap of top cover rubber compound (4).

7. The method of splicing the ends (11, 12) of conveyor belts (10) of claim 1 wherein the bottom or top strips are applied to a separation liner (50) as they are being formed.

8. The method of splicing the ends (11, 12) a conveyor belt (10) of claim 1 wherein the number of strands receiving grooves (22) is about twice the number of strands (1) from an end (11, 12) of the belt (10).

9. Elastomeric strips (20) for splicing a steel cable reinforced belt (10), the strip (20) having a width (W_{S}) and a length L, each strip (20) being as uncured strip having a cross-sectional profile extending across the width (Wₛ) of the strip, the profile having a plurality of substantially semi-circular depressions extending parallel along the length of the ship, each depression providing a steel strand receiving groove (22) for placement of a steel strand (1), **characterized by** each uncured strip being calendered to form dual component strips (20), the top strip (20) having a cover layer elastomer (4) laminated to a side (26) of the strip (20) opposite the depressions and the bottom strip (20) having a pulley layer elastomer (3) laminated to a side (26) opposite the depressions.

10. The elastomeric strip (20) for splicing a steel cable reinforced belt (10) of claim 9 further **characterized in that** the width (W_{S}) of one strip (20) is less than the width (W_{S}) of the belts (10) to be spliced, thereby, requiring a plurality of strips (20) for each splice joint.

11. A splice joint kit of the elastomeric strips (20) for splicing a steel cable reinforced belt (10) of claim 1, the kit **characterized by** four or more uncured strips (20), each strip (20) being calendered as claimed in claim 1, and placed in an elongated shipping container and spaced by a separator means.

12. The kit of claim 11 wherein the separator means (50) is a separation liner (50).

## Patentansprüche

1. Verfahren für die Spleißverbindung der Enden (11, 12) von Förderbändern (10), die einen vulkanisierten Gummi (12) mit in den vulkanisierten Gummi eingebetteten Stahllitzen (1) besitzen, das die folgenden Schritte umfasst:
Freilegen mehrerer Litzen (1);
Vorsehen mindestens zweier nicht vulkanisierter Streifen (20) aus Gummi, wobei wenigstens ein Streifen (20) ein unterer Streifen mit mehreren im Wesentlichen parallelen Litzenaufnahmenuten (22) ist, der sich an einer oberen Oberfläche befindet, während der andere wenigstens eine Streifen (20) ein oberer Streifen ist;
Anordnen der freigelegten Litzen (1) auf den zu verbindenden Bandenden (11, 12) in den Nuten (22) des wenigstens einen unteren Streifens (20);
Anordnen des oberen Streifens (20) über dem unteren Streifen (20) und Vulkanisieren der Streifen (20) miteinander und mit den Litzen (1), um dadurch die Spleißverbindung zu bilden, wobei das Verfahren **dadurch gekennzeichnet ist, dass** der Schritt des Vorsehens der oberen oder unteren Streifen (20) die Schritte des Kalandrierens in Streifen (20) umfasst, wobei die Kalander (350, 352) mehrere parallele Komponentenbildungsstege (356) aufweisen, wobei die Stege (356) die Litzenaufnahmenuten (22) der oberen Oberfläche (24) der Streifen (20) bilden.

2. Verfahren für die Spleißverbindung der Enden (11, 12) eines Förderbandes (10) nach Anspruch 1, bei dem der Schritt, bei dem mehrere Litzen (1) freigelegt werden, das Entfernen eines Teils der zu verbindenden Bandenden (11, 12) und das Vorsehen von wenigstens zwei nicht vulkanisierten Streifen (20) aus Gummi umfasst, das seinerseits die Schritte umfasst, bei denen wenigstens zwei untere Streifen (20) vorgesehen werden und die Streifen (20) nebeneinander angeordnet werden, um die Breite der Streifen (20) zu erhöhen, und einer der wenigstens zwei unteren Streifen (20) parallel zu den Nuten (22) abgeschnitten wird, um dadurch die Streifen-Gesamtbreite im Wesentlichen an die Förderbandbreite anzupassen.

3. Verfahren für die Spleißverbindung der Enden (11, 12) eines Förderbandes (10) nach Anspruch 1, bei dem die oberen Streifen (20) und die unteren Streifen (20) die gleiche Anzahl von Aufnahmenuten (22) enthalten.

4. Verfahren für die Spleißverbindung der Enden (11, 12) eines Förderbandes (10) nach Anspruch 1, bei dem die oberen und die unteren Streifen (20) das gleiche Querschnittsprofil besitzen.

5. Verfahren für die Spleißverbindung der Enden (11, 12) eines Förderbandes (10) nach Anspruch 1, bei dem der Schritt des Kalandrierens den Schritt des Aufbringens des unteren Streifens (20) auf einen Streifen aus Riemenscheibenkontakt-Gummimischungen (3) beim Formen des unteren Streifens (20) an der Kalanderwalze umfasst, um dadurch einen unteren Doppelmischungsstreifen (20) zu bilden.

6. Verfahren für die Spleißverbindung der Enden (11, 12) eines Förderbandes (10) nach Anspruch 1, bei dem der Schritt des Kalandrierens den Schritt des Aufbringens des oberen Streifens (20) auf einen Streifen aus einer Abdeckgummimischung (4) umfasst.

7. Verfahren für die Spleißverbindung der Enden (11, 12) eines Förderbandes (10) nach Anspruch 1, bei dem die unteren oder die oberen Streifen beim Formen auf eine Trennunterlage (50) aufgebracht werden.

8. Verfahren für die Spleißverbindung der Enden (11, 12) eines Förderbandes (10) nach Anspruch 1, bei dem die Anzahl von Litzenaufnahmenuten (22) etwa gleich der doppelten Anzahl von Litzen (1) von einem Ende (11, 12) des Bandes (10) ist.

9. Elastomere Streifen (20) für die Spleißverbindung eines stahldrahtverstärkten Bandes (10), wobei der Streifen (20) eine Breite (W_{S}) und eine Länge (L_{S}) besitzt, wobei jeder Streifen (20) ein nicht vulkanisierter Streifen mit einem Querschnittsprofil ist, das sich über die Breite (W_{S}) des Streifens erstreckt, wobei das Profil mehrere im Wesentlichen halbkreisförmige Vertiefungen besitzt, die sich in Richtung der Länge des Streifens parallel erstrecken, wobei jede Vertiefung eine Stahllitzenaufnahmenut (22) für die Anordnung einer Stahllitze (1) schafft, **dadurch gekennzeichnet, dass** jeder nicht vulkanisierte Streifen kalandriert wird, um Zweikomponentenstreifen (20) zu bilden, wobei der obere Streifen (20) ein Abdeckschichtelastomer (4) enthält, das auf eine Seite (26) des Streifens (20), die den Vertiefungen gegenüberliegt, laminiert ist, und der untere Streifen (20) eine Riemenscheibenschicht (3) enthält, die auf eine Seite (26), die den Vertiefungen gegenüberliegt, laminiert ist.

10. Elastomere Streifen (20) für die Spleißverbindung eines stahldrahtverstärkten Bandes (10) nach Anspruch 9, das ferner **dadurch gekennzeichnet ist, dass** die Breite (W_{S}) eines Streifens (20) kleiner als die Breite (W_{S}) der zu spleißenden Bänder (10) ist, weshalb mehrere Streifen (20) für jede Spleißverbindung erforderlich sind.

11. Spleißverbindungs-Bausatz aus den elastomeren Streifen (20) für die Spleißverbindung eines stahldrahtverstärkten Bandes (10) nach Anspruch 1, wobei der Bausatz durch vier oder mehr nicht vulkanisierte Streifen (20) **gekennzeichnet** ist, wovon jeder wie in Anspruch 1 beansprucht kalandriert ist und in einem länglichen Transportbehälter angeordnet und durch ein Trennmittel beabstandet ist.

12. Bausatz nach Anspruch 11, wobei das Trennmittel (50) eine Trennunterlage (50) ist.

## Revendications

1. Procédé de jonction par épissage des extrémités (11, 12) de courroies transporteuses (10) possédant du caoutchouc vulcanisé (12) avec des torons en acier enrobés du caoutchouc vulcanisé, comprenant les étapes consistant à :
exposer plusieurs torons (1) ;
procurer au moins deux rubans non vulcanisés (20) de caoutchouc, au moins un ruban (20) représentant un ruban de base possédant plusieurs rainures de réception de torons (22) qui sont disposées en position essentiellement parallèle en étant situées sur la surface supérieure (24), l'autre ruban parmi ledit au moins un ruban (20) représentant un ruban de sommet ;
placer les torons exposés (1) des extrémités (11, 12) de la courroie à l'état joint dans les rainures (22) dudit au moins un ruban de base (20) ;
placer le ruban de sommet (20) de telle sorte qu'il chevauche le ruban de base (20) et vulcaniser les rubans (20) l'un à l'autre et aux torons (1) pour ainsi obtenir le joint réalisé par épissage, le procédé étant **caractérisé en ce que** l'étape destinée à procurer les rubans de sommet et de base (20) englobe les étapes consistant à calandrer les rubans (20),. les calandres (350, 352) possédant plusieurs nervures de formation de composants (356) disposées en position parallèle, les nervures (356) formant les rainures de réception de torons (22) de la surface supérieure (24) des rubans (20).

2. Procédé de jonction par épissage des extrémités (11, 12) d'une courroie transporteuse (10) selon la revendication 1, dans lequel l'étape consistant à exposer plusieurs torons (1) englobe le fait de retirer une portion des extrémités de la courroie (11, 12) qui doivent être jointes, et le fait de procurer au moins deux rubans de caoutchouc (20) à l'état non vulcanisé englobe les étapes consistant à procurer au moins deux rubans de base (20) et à positionner les rubans (20) en position adjacente dans le but d'augmenter la largeur des rubans (20) et le fait de découper un desdits au moins deux rubans de base (20) parallèlement aux rainures (22) pour ainsi obtenir une correspondance substantielle entre la largeur totale des rubans et la largeur de la courroie transporteuse.

3. Procédé de jonction par épissage des extrémités (11, 12) d'une courroie transporteuse (10) selon la revendication 1, dans lequel les rubans de sommet (20) et les rubans de base (20) possèdent le même nombre de rainures de réception (22).

4. Procédé de jonction par épissage des extrémités (11, 12) d'une courroie transporteuse (10) selon la revendication 1, dans lequel les rubans de sommet et les rubans de base (20) possèdent le même profil en coupe transversale.

5. Procédé de jonction par épissage des extrémités (11, 12) d'une courroie transporteuse (10) selon la revendication 1, dans lequel l'étape de calandrage englobe les étapes consistant à appliquer le ruban de base (20) sur un ruban de composé de caoutchouc (3) entrant en contact avec une poulie lors de la formation du ruban de base (20) au rouleau de calandrage, pour ainsi former un ruban de base (20) comprenant deux composés.

6. Procédé de jonction par épissage des extrémités (11, 12) d'une courroie transporteuse (10) selon la revendication 1, dans lequel l'étape de calandrage englobe l'étape consistant à appliquer le ruban de sommet (20) sur un ruban d'un composé de caoutchouc de recouvrement de sommet.

7. Procédé de jonction par épissage des extrémités (11, 12) d'une courroie transporteuse (10) selon la revendication 1, dans lequel les rubans de base ou de sommet sont appliqués sur une gaine de séparation (50) au cours de leur formation.

8. Procédé de jonction par épissage des extrémités (11, 12) d'une courroie transporteuse (10) selon la revendication 1, dans lequel le nombre des rainures de réception de torons (22) représente environ deux fois le nombre des torons (1), compté à partir d'une extrémité (11, 12) de la courroie (10).

9. Rubans élastomères (20) pour la jonction par épissage d'une courroie (10) renforcée avec des câblés en acier, les rubans (20) possédant une largeur (W_{S}) et une longueur (L), chaque ruban (20) représentant un ruban non vulcanisé possédant un profil en section transversale qui s'étend sur la largeur du ruban (W_{S}), le profil possédant plusieurs dépressions essentiellement semi-circulaires s'étendant parallèlement sur la longueur du ruban, chaque dépression procurant une rainure de réception de torons en acier (22) pour l'insertion de torons en acier (1), **caractérisé par le fait que** chaque ruban non vulcanisé est calandré pour former des rubans à double composant (20), le ruban de sommet (20) possédant un élastomère de couche côté recouvrement (4) stratifié au côté (26) du ruban (20) opposé aux dépressions et le ruban de base (20) possède un élastomère de couche côté poulie (3) stratifié au côté (26) opposé aux dépressions.

10. Ruban élastomère (20) pour la jonction par épissage d'une courroie (10) renforcée avec des câblés en acier selon la revendication 9, **caractérisé en outre en ce que** la largeur (W_{S}) d'un ruban (20) est inférieure à la largeur (W_{B}) des courroies (10) qui doivent faire l'objet d'une jonction par épissage, si bien que l'on a besoin de plusieurs rubans (20) pour chaque joint réalisé par épissage.

11. Nécessaire de formation de joint par épissage de rubans élastomères (20) pour la jonction par épissage d'une courroie (10) renforcée avec des câblés en acier selon la revendication 1, le nécessaire étant **caractérisé par** quatre rubans ou plus (20) à l'état non vulcanisé, chaque ruban (20) étant calandré comme revendiqué à la revendication 1 et étant placé dans un conteneur d'expédition allongé, les rubans étant espacés les uns des autres par des moyens de séparation.

12. Nécessaire selon la revendication 11, dans lequel le moyen de séparation (50) est une gaine de séparation (50).
